# EUROPEAN PATENT APPLICATION

(11) **EP 4 246 756 A1**
(43) Date of publication of application: **20.09.2023**
(21) Application number: 22161896.0
(22) Date of filing: 14.03.2022
(51) Int. Cl.: H02J 3/38

(54) **SMART POWER GRID**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described a power grid comprising a plurality of energy generating devices (1) configured to generate electric energy and a plurality of energy consuming devices (2) configured to consume electric energy from the energy generating devices (1). At least one of the energy consuming devices (2) is a particular energy consuming device (2a) which comprises storing means in which a receiving key is stored, the receiving key includes data about a consumer compatibility criterion. At least one of the energy generating devices (1) is a particular energy generating device (1a) which comprises storing means in which a sending key is stored, the sending key includes data about a generator compatibility criterion. The electric grid comprises a control means which is configured to make, in real time, the at least one particular energy generating device (1a) to generate and supply electric energy to the at least one particular energy consuming device (2a), if the consumer compatibility criterion matches the generator compatibility criterion.

## Description

### Field of invention

The present invention relates to a smart power grid. The power grid can consider different energy carriers such as electricity, natural gas, hydrogen, fossil fuel, etc. The present invention particularly refers to an electric grid.

Energy generation and consumption devices in the prior art are quite simple devices when referring to the general characteristics of generating, transmitting and consuming energy. The energy generating devices can generate energy as much as possible at any time. The energy consuming devices can immediately and permanently plug and play if technical specifications of the devices comply with grid code standards, market standards and regulations as well as device-specific national and international standards. For example, a photovoltaic plant can be connected to an electric grid and feeds into the grid as long as physical, commercial and/or regulatory requirements are fulfilled. As another example, a toaster can be connected to an electric grid, and the toaster can operate if physical requirements match, and electricity is just available at plug.

### Summary of the Invention

There may be a need for power grid which enables higher flexibility and efficiency. This need may be met by the subject matter according to the independent claim. The present invention is further developed as set forth in the dependent claims.

According to an aspect of the invention, a power grid comprises a plurality of energy generating devices configured to generate electric energy and a plurality of energy consuming devices configured to consume electric energy from the energy generating devices. At least one of the energy consuming devices is a particular energy consuming device which comprises storing means in which a receiving key is stored, the receiving key includes data about a consumer compatibility criterion. At least one of the energy generating devices is a particular energy generating device which comprises storing means in which a sending key is stored, the sending key includes data about a generator compatibility criterion. The electric grid comprises a control means which is configured to make, in real time, the at least one particular energy generating device to generate and supply electric energy to the at least one particular energy consuming device, if the consumer compatibility criterion of the at least one particular energy consuming device matches the generator compatibility criterion of the at least one particular energy generating device.

In an embodiment, the power grid further comprises a plurality of the particular energy generating devices and a plurality of the particular energy consuming devices; and a grid operating device comprising the control means which is configured to control an energy flow from the plurality of energy generating devices to the plurality of energy consuming devices, the grid operating device comprises a keychain which includes the sending keys of the particular energy generating devices and the receiving keys of the particular energy consuming devices. The receiving keys further include an energy amount which is intended to be consumed within a predetermined time period by the respective particular energy consuming device. The control means makes the particular energy generating devices to generate and supply energy to the plurality of the particular energy consuming devices with a total energy amount within the predetermined time period as included in the receiving keys of the particular energy consuming devices.

In an embodiment, the power grid further comprises a plurality of the particular energy generating devices and a plurality of the particular energy consuming devices; and a grid operating device comprising the control means which is configured to control an energy flow from the plurality of energy generating devices to the plurality of energy consuming devices, the grid operating device comprises a keychain which includes the sending keys of the particular energy generating devices and the receiving keys of the particular energy consuming devices. The receiving keys further include an energy amount which is intended to be consumed within a predetermined time period by the respective particular energy consuming device. The sending keys further include an energy amount which can be generated within the predetermined time period by the respective particular energy generating device. If a total amount of electric energy which can be generated within the predetermined time period by the particular energy generating devices exceeds a total amount of electric energy which is intended to be consumed within the predetermined time period by the particular energy consuming devices, the control means of the grid operating device makes the particular energy generating devices to generate and supply the excessive electric energy to at least one further energy consuming device of the plurality of energy consuming devices, which does not comprise any receiving key, or to at least one particular energy consuming device of the plurality of energy consuming devices, which comprise a receiving key which does not match the sending keys of the particular energy generating devices.

In an embodiment, the at least one particular energy generating device or the at least one particular energy consuming device comprises the control means.

In an embodiment, the generator compatibility criterion and the consumer compatibility criterion comprise at least one of a frequency tolerance, a pressure tolerance, an indicator of renewable energy, an energy efficiency degree, and a parameter related to a CO₂-footprint. A generator compatibility criterion can also indicate a flexibility or responsiveness of energy generation which is relevant for grid operators to comply with a grid code and control requirements. The generator compatibility criterion can also be measured by the environmental impact of the energy generation such as the indicator of renewable energy or the CO₂-footprint which can be relevant for consumers in subsequent processes (e.g., electrolysis, computing, etc.)

In an embodiment, the sending key and/or the receiving key are transmitted to and from the control means via a grid mains line, preferably via a 50Hz alternating current having a modulated data signal of the sending key and/or the receiving key.

In an embodiment, the sending key and/or the receiving key are transmitted to and from the control means via internet, direct wireless data transmission, or satellite.

In an embodiment, the power grid further comprises at least one further energy generating device of the plurality of energy generating devices, which does not comprise any sending key, or at least one particular energy generating device of the plurality of energy generating devices, which comprises a sending key which does not match the receiving keys of the particular energy consuming devices; and at least one further energy consuming device of the plurality of energy consuming devices, which does not comprise any receiving key, or at least one particular energy consuming device of the plurality of energy consuming devices, which comprises a receiving key which does not match the sending keys of the particular energy generating devices. The control means is configured to make, in real time, the at least one further energy generating device of the plurality of energy generating devices, which does not comprise any sending key, or the at least one particular energy generating device of the plurality of energy generating devices, which comprises a sending key which does not match the receiving keys of the particular energy consuming devices, to generate and supply electric energy to the at least one further energy consuming device of the plurality of energy consuming devices, which does not comprise any receiving key, or to the at least one particular energy consuming device of the plurality of energy consuming devices, which comprises a receiving key which does not match the sending keys of the particular energy generating devices.

Advantageously, to couple the energy generating devices, the energy consuming devices and transmission systems, for example with reference to the European market setup for electricity and gas, a power grid is provided which can negotiate, bid, schedule, balance, optimize and troubleshoot the generation, transmission and consumption of energy considering the constraints. The compatibility criteria are checked in real-time and not under static regulations.

Further advantageously, requirements to decarbonize the energy sector can be fulfilled, for example by prioritizing renewable energy. The efficiency can further be increased as energy generation and consumption are allocated and scheduled depending on the compatibility of energy. For example, if a new energy generating device is set up and delivers energy to an energy consuming device, the energy generating device can refuse supply of energy to the energy consuming device if the consumption is not compatible. For example, if the energy consuming device is a toaster that has an efficiency class of less than B+, a supply of energy from the energy generating device can be refused because energy efficiency is to low and hence a non-compatible energy utilization.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig.: 1 shows a schematic view of a smart grid according to an embodiment of the present patent application.

### Detailed Description

The illustration in the drawing is schematically. It is noted that similar or identical elements are provided with the same reference signs.

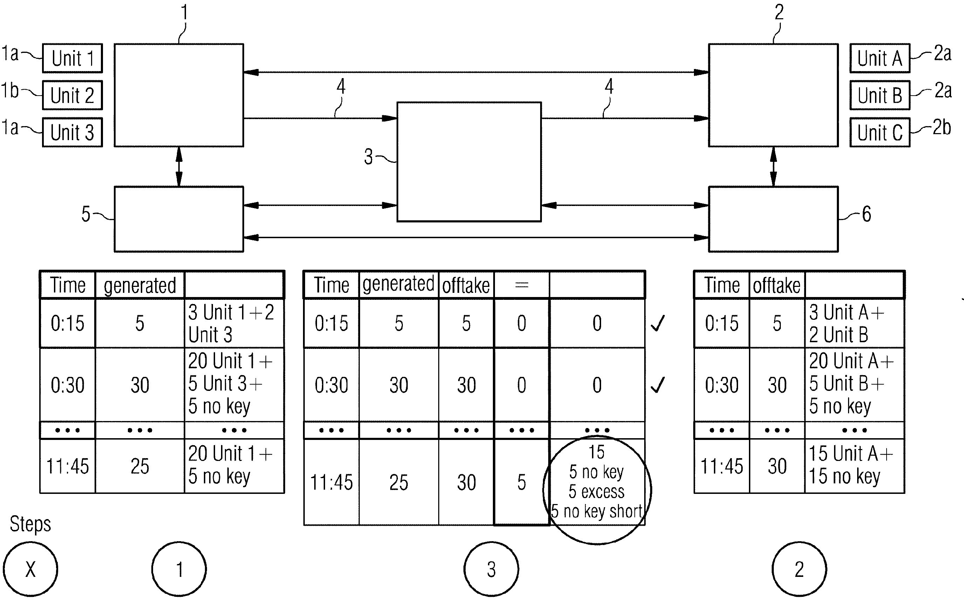

**Fig. 1** shows a schematic view of a smart grid according to an embodiment of the present patent application. The power grid generally comprises a plurality of energy generating devices 1 configured to generate electric energy and a plurality of energy consuming devices 2 configured to consume electric energy from the energy generating devices 1. The power from the energy generating devices 1 is supplied to the energy consuming devices 2 via power lines 4.

In the specific embodiment of Fig. 1, two out of three energy consuming devices 2 are particular energy consuming devices 2a (Unit A, Unit B) which comprise storing means in which a receiving key is stored, the receiving key includes data about a consumer compatibility criterion. The remaining further energy consuming device 2b (Unit C) does not comprise such storing means in which a receiving key is stored.

Two out of three energy generating devices 1 are particular energy generating devices 1a (Unit 1, Unit 3) which comprises storing means in which a sending key is stored, the sending key includes data about a generator compatibility criterion. The remaining further energy generating device 1b (Unit 2) does not comprise such storing means in which a sending key is stored.

The electric grid comprises a control means which is configured to make, in real time, the particular energy generating devices 1a to generate and supply electric energy to the particular energy consuming devices 2a, if the consumer compatibility criteria of the particular energy consuming devices 2a match the generator compatibility criteria of the particular energy generating devices 1a. The control means can be operated by a software containing a keychain part of the particular energy generating devices 1a and checks in real-time the availability of a compliant keychain part of the particular energy consuming devices 2a to match and allow actual flow of energy.

In the embodiment of Fig. 1, the power grid further comprises a separate grid operating device 3, which in turn comprises the control means. The control means of the grid operating device 3 is configured to control an energy flow from the plurality of energy generating devices 1 to the plurality of energy consuming devices 2. The grid operating device 3 comprises the keychain which includes the sending keys of the particular energy generating devices 1a and the receiving keys of the particular energy consuming devices 2a.

The receiving keys of the particular energy consuming devices 2a can further include an energy amount which is intended to be consumed within a predetermined time period by the respective particular energy consuming device 2a, and the sending keys of the particular energy generating devices 1a can further include an energy amount which can be generated within the predetermined time period by the respective particular energy generating device 1a. Such receiving keys and sending keys are dynamic keys.

The control means of the grid operating device 3 makes the particular energy generating devices 1a to generate and supply the energy amount to the plurality of the particular energy consuming devices 2a in the energy amount within the predetermined time period as included in the receiving keys of the particular energy consuming devices 2a.

The sending keys can further include an energy amount which can be generated within the predetermined time period by the respective particular energy generating device 1a. If a total amount of electric energy, which can be generated within the predetermined time period by the particular energy generating devices 1a, exceeds a total amount of electric energy intended to be consumed within the predetermined time period by the particular energy consuming devices 2a, the control means of the grid operating device 3 makes the particular energy generating devices 1a to generate and supply the excessive electric energy to at least one further energy consuming device 2b of the plurality of energy consuming devices 2, which does not comprise any receiving key, or to at least one particular energy consuming device 2a of the plurality of energy consuming devices 2, which comprises a receiving key which does not match the sending keys of the particular energy generating devices 1a.

In an embodiment, the power grid further comprises a plurality of the particular energy generating devices and a plurality of the particular energy consuming devices; and a grid operating device comprising the control means which is configured to control an energy flow from the plurality of energy generating devices to the plurality of energy consuming devices, the grid operating device comprises a keychain which includes the sending keys of the particular energy generating devices and the receiving keys of the particular energy consuming devices The receiving keys further include an energy amount which is intended to be consumed within a predetermined time period by the respective particular energy consuming device; and the sending keys further include an energy amount which can be generated within the predetermined time period by the respective particular energy generating device. The control means elects a subgroup of the particular energy generating devices such that an energy amount which can be generated within the predetermined time period by the subgroup of the particular energy generating device matches a total energy amount within the predetermined time period as included in the receiving keys of the particular energy consuming devices.

The generator compatibility criterion and the consumer compatibility criterion can comprise at least one of a frequency tolerance for electricity, a pressure tolerance for gas, an indicator of renewable energy, an energy efficiency degree, and a parameter related to a CO₂-footprint.

The sending key and/or the receiving key can be transmitted to and from the control means via a grid mains line which is formed in the embodiment of Fig. 1 by the power lines 4, preferably via a 50 Hz alternating current with a modulated data signal of the sending key and/or the receiving key. Alternatively, the sending key and/or the receiving key can be transmitted to and from the control means via internet, direct wireless data transmission, or satellite.

In the embodiment of Fig. 1, the power grid further comprises a balancing responsible generation party 5 and a balancing responsible consumption party 6, which exchange data about a scheduled power generation and offtake. The balancing responsible generation party 5 communicates with the energy generating devices 1 a commercial agreement to schedule, balance and/or control the scheduled power generation. The balancing responsible consumption party 6 communicates with the energy consuming devices 2 a commercial agreement to schedule, balance and/or control the scheduled power offtake. Alternatively, or in addition, the energy generating devices 1 and the energy consuming devices 2 can directly exchange data about the scheduled power generation and offtake based on a commercial agreement, and/or environmental attributes.

One of the energy generating devices 1 or one of the energy consuming devices 2 can comprise the control means which is configured to make, in real time, the particular energy generating devices 1a to generate and supply electric energy to the particular energy consuming devices 2a, if the consumer compatibility criterion of the particular energy consuming devices 2a matches the generator compatibility criterion of the particular energy generating devices 1a.

In the following, an example is described, where energy generating devices 1 for renewable energy might refuse production due to a missing compliance on the consumer side. In the embodiment of Fig. 1, the renewable energy generator operates three energy generating devices 1, namely Unit 1, Unit 2 and Unit 3. Out of these three energy generating devices 1, Unit 1 and Unit 3 are wind turbines (WTG) which are particular energy generating devices 1a comprising storing means in which a sending key is stored. The sending keys include the data about the generator compatibility criterion. Unit 2 is the remaining further energy generating device 1b which does not comprise such storing means in which a sending key is stored.

The real-time control by the control means is performed in a way that the wind turbines as particular energy generating devices 1a, i.e., the Units 1 and 3, intend to generate electricity only if the sending keys in Unit 1 and Unit 3 match one or both receiving keys held by Unit A or Unit B, or by a keychain, i.e., aggregated keys, held by the grid operating device 3 as an aggregator of keys, in the exact amount to balance available produced energy against available consumed energy.

For example, the power grid comprises the wind turbine as the Unit 1 which is able to produce 10 MWh for the next 10 min and could schedule these 10 MWh in accordance with the balancing responsible generation party and is able to feed it into the grid of the grid operating device 3 and provides a specific sending key (e.g., "UCK 1 for 10 MWh for 00:10-00:20"), then a matching counterpart is required for Unit 1 to actually produce these 10 MWh. If a receiving key is found for exactly these 10 MWh and for that time, Unit 1 produces 10 MWh.

If within the power grid in this previous example, energy consuming devices for renewable energy include Unit A that is only able to offtake 5 MWh for the given period and assuming this energy consuming device does not have any additional energy consuming device which is able to offtake more energy, and if no aggregator such as the grid operating device 3 holds receiving keys from other energy consuming devices of renewable energy for that given time period, the particular energy generating devices 1a (Unit 1 and Unit 3) for renewable energy might not want to be able to provide 10 MWh of utilization-compliant energy. The particular energy generating devices 1a (Unit 1 and Unit 3) for renewable energy are then free to choose either to produce 5 MWh of utilization compliant energy in Unit 1 and curtail to produce only 5 MWh from Unit 1 in total for that given period, or to produce 10 MWh of energy, of which only 5 MWh are allocated to a particular energy consuming device 1a, and the other 5 MWh are produced with no utilization compatibility proof. E.g., no utilization compatibility proof could mean that the energy has been used in very inefficient processes or even has been spilled without any further use or has been delivered to undesired consumers.

Another example is given by steps 1, 2 and 3 in Fig. 1. In step 1, the particular energy generating devices 1a for renewable energy, i.e., Unit 1 and Unit 3, are able to produce in total 5 MWh at 0:15 for the next 15 minutes, strictly speaking 3 MWh by Unit 1 and 2 MWh by Unit 3.

At the consumer side in step 2, the particular energy consuming devices 2a for renewable energy, i.e., Unit A and Unit B, are able to consume in total 5 MWh in the time period of the next 15 minutes, strictly speaking 3 MWh by Unit A and 2 MWh by Unit B. Therefore, the renewable energy of 5 MWh is scheduled to be generated and supplied in step 3.

The next time period starts at 0:30. In step 1, the particular energy generating devices 1a for renewable energy, i.e., Unit 1 and Unit 3, are able to produce in total 25 MWh in the time period of the next 15 minutes, strictly speaking 20 MWh by Unit 1 and 5 MWh by Unit 3. In addition, the further energy generating device 1b, i.e., Unit 2 which does not have any stored sending key, is able to produce further 5 MWh.

At the consumer side in step 2, the particular energy consuming devices 2a for renewable energy, i.e., Unit A and Unit B, are able to consume in total 25 MWh in the time period of the next 15 minutes, strictly speaking 20 MWh by Unit A and 5 MWh by Unit B. In addition, the further energy consuming device 2b, i.e., Unit C which does not have any stored receiving key, is able to consume further 5 MWh. Therefore, the renewable energy of 30 MWh is fully scheduled to be generated and supplied in step 3.

Another time period starts at 11:45. In step 1, the particular energy generating device 1a for renewable energy, i.e., Unit 1, is able to produce 20 MWh in the time period of the next 15 minutes. In addition, the further energy generating device 1b, i.e., Unit 2 which does not have any stored sending key, is able to produce further 5 MWh.

At the consumer side in step 2, the particular energy consuming device 2a for renewable energy, i.e., Unit A, is able to consume 15 MWh in the time period of the next 15 minutes. In addition, the further energy consuming device 2b, i.e., Unit C which does not have any stored receiving key, is able to consume further 15 MWh.

Therefore, the renewable energy of 15 MWh is scheduled to be generated and supplied in step 3 from Unit 1 to Unit A. For the excessive and remaining 5 MWh, Unit 1 will either refuse to generate these 5 MWh or supply these 5 MWh to the further energy consuming device 2b, i.e., Unit C. The further energy generating device 1b, i.e., Unit 2 will also supply its 5 MWh to the further energy consuming device 2b, i.e., Unit C. In this case, Unit C shall find another energy generating device for supplying the outstanding difference of 5 MWh.

In a modification of the embodiment of Fig. 1, one of the particular energy generating devices 1a or one of the particular energy consuming devices 2a can comprise the control means.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A power grid comprising a plurality of energy generating devices (1) configured to generate electric energy and a plurality of energy consuming devices (2) configured to consume electric energy from the energy generating devices (1); wherein
at least one of the energy consuming devices (2) is a particular energy consuming device (2a) which comprises storing means in which a receiving key is stored, the receiving key includes data about a consumer compatibility criterion;
at least one of the energy generating devices (1) is a particular energy generating device (1a) which comprises storing means in which a sending key is stored, the sending key includes data about a generator compatibility criterion; and
the electric grid comprises a control means which is configured to make, in real time, the at least one particular energy generating device (1a) to generate and supply electric energy to the at least one particular energy consuming device (2a), if the consumer compatibility criterion of the at least one particular energy consuming device (2a) matches the generator compatibility criterion of the at least one particular energy generating device (1a).

2. The power grid according to the preceding claim, further comprising:
a plurality of the particular energy generating devices (1a) and a plurality of the particular energy consuming devices (2a); and
a grid operating device (3) comprising the control means which is configured to control an energy flow from the plurality of energy generating devices (1) to the plurality of energy consuming devices (2), the grid operating device (3) comprises a keychain which includes the sending keys of the particular energy generating devices (1a) and the receiving keys of the particular energy consuming devices (2a); wherein
the receiving keys further include an energy amount which is intended to be consumed within a predetermined time period by the respective particular energy consuming device (2a); and
the control means makes the particular energy generating devices (1a) to generate and supply energy to the particular energy consuming devices (2a) with a total energy amount within the predetermined time period as included in the receiving keys of the particular energy consuming devices (2a).

3. The power grid according to according to claim 1 or 2, further comprising:
a plurality of the particular energy generating devices (1a) and a plurality of the particular energy consuming devices (2a); and
a grid operating device (3) comprising the control means which is configured to control an energy flow from the plurality of energy generating devices (1) to the plurality of energy consuming devices (2), the grid operating device (3) comprises a keychain which includes the sending keys of the particular energy generating devices (1a) and the receiving keys of the particular energy consuming devices (2a); wherein
the receiving keys further include an energy amount which is intended to be consumed within a predetermined time period by the respective particular energy consuming device (2a) ;
the sending keys further include an energy amount which can be generated within the predetermined time period by the respective particular energy generating device (1a), and,
if a total amount of electric energy which can be generated within the predetermined time period by the particular energy generating devices (1a) exceeds a total amount of electric energy which is intended to be consumed within the predetermined time period by the particular energy consuming devices (2a), the control means of the grid operating device (3) makes the particular energy generating devices (1a) to generate and supply the excessive electric energy to at least one further energy consuming device (2b) of the plurality of energy consuming devices (2), which does not comprise any receiving key, or to at least one particular energy consuming device (2a) of the plurality of energy consuming devices (2), which comprise a receiving key which does not match the sending keys of the particular energy generating devices (1a).

4. The power grid according to according to any one of the preceding claims, further comprising:
a plurality of the particular energy generating devices (1a) and a plurality of the particular energy consuming devices (2a); and
a grid operating device (3) comprising the control means which is configured to control an energy flow from the plurality of energy generating devices (1) to the plurality of energy consuming devices (2), the grid operating device (3) comprises a keychain which includes the sending keys of the particular energy generating devices (1a) and the receiving keys of the particular energy consuming devices (2a); wherein
the receiving keys further include an energy amount which is intended to be consumed within a predetermined time period by the respective particular energy consuming device (2a) ;
the sending keys further include an energy amount which can be generated within the predetermined time period by the respective particular energy generating device (1a); and
the control means elects a subgroup of the particular energy generating devices (1a) such that an energy amount which can be generated within the predetermined time period by the subgroup of the particular energy generating device (1a) matches a total energy amount within the predetermined time period as included in the receiving keys of the particular energy consuming devices (2a).

5. The power grid according to any one of the preceding claims, wherein
the at least one particular energy generating device (1a) or the at least one particular energy consuming device (2a) comprises the control means.

6. The power grid according to any one of the preceding claims, wherein
the generator compatibility criterion and the consumer compatibility criterion comprise at least one of a frequency tolerance, a pressure tolerance, an indicator of renewable energy, an energy efficiency degree, and a parameter related to a CO₂-footprint.

7. The power grid according to any one of the preceding claims, wherein
the sending key and/or the receiving key are transmitted to and from the control means via a grid mains line, preferably via a 50Hz alternating current having a modulated data signal of the sending key and/or the receiving key.

8. The power grid according to any one of the preceding claims, wherein
the sending key and/or the receiving key are transmitted to and from the control means via internet, direct wireless data transmission, or satellite.

9. The power grid according to any one of the preceding claims, further comprising:
at least one further energy generating device (1b) of the plurality of energy generating devices (1), which does not comprise any sending key, or at least one particular energy generating device (1a) of the plurality of energy generating devices (1), which comprises a sending key which does not match the receiving keys of the particular energy consuming devices (2a);
at least one further energy consuming device (2b) of the plurality of energy consuming devices (2), which does not comprise any receiving key, or at least one particular energy consuming device (2a) of the plurality of energy consuming devices (2), which comprises a receiving key which does not match the sending keys of the particular energy generating devices (1a);
wherein the control means is configured to make, in real time, the at least one further energy generating device (1b) of the plurality of energy generating devices (1), which does not comprise any sending key, or the at least one particular energy generating device (1a) of the plurality of energy generating devices (1), which comprises a sending key which does not match the receiving keys of the particular energy consuming devices (2a), to generate and supply electric energy to the at least one further energy consuming device (2b) of the plurality of energy consuming devices (2), which does not comprise any receiving key, or to the at least one particular energy consuming device (2a) of the plurality of energy consuming devices (2), which comprises a receiving key which does not match the sending keys of the particular energy generating devices (1a).
